# EUROPEAN PATENT APPLICATION

(11) **EP 1 296 407 A1**
(43) Date of publication of application: **26.03.2003**
(21) Application number: 00935652.8
(22) Date of filing: 12.06.2000
(51) Int. Cl.: H01Q 1/24, H04B 1/38, H04B 7/26, H01Q 9/30, H01Q 1/08

(54) **PORTABLE RADIO UNIT**

(71) Applicant: MITSUBISHI DENKI KABUSHIKI KAISHA, Tokyo 100-8310 (JP)
(72) Inventor: SHOJI, Hideaki, Chiyoda-ku Tokyo 100-8310 (JP); IMANISHI, Yasuhito, Chiyoda-ku Tokyo 100-8310 (JP); FUKASAWA, Toru, Chiyoda-ku Tokyo 100-8310 (JP); OHMINE, Hiroyuki, Chiyoda-ku Tokyo 100-8310 (JP)
(74) Representative: Sajda, Wolf E., Dipl.-Phys.
(86) International application number: JP0003818
(87) International publication number: WO01097325

(57) **Abstract**

In one aspect of the present invention, a portable radio (1) is provided with: a casing (2); a cover (3) attached to casing (2) so as to be freely opened and closed; a dipole antenna (5) attached to cover (3); an open-close detection means (7) for detecting the opening/closing of cover (3); a power supply means (4a, 4b, 6a, 6b) for supplying power to dipole antenna (5); and a power supply control means (8) for controlling power supply means (4a, 4b, 6a, 6b) based upon the opening/closing of cover (3). In another aspect thereof, the portable radio (1) is provided with a resonator (9) installed in casing (2), and resonator (9) is placed at a position close to dipole antenna (5) when cover (3) is closed. In still another aspect thereof, in response to the opening/closing of cover (3), first and second matching circuits (12, 13), power supply means (6) and dipole antenna (5) are switched and connected.

## Description

### Field of the Invention

The present invention relates to a portable radio, and, more particularly, concerns a portable radio provided with an antenna installed in a housing section (hereinafter, referred to as cover) that is freely opened and closed.

### Background Art

Japanese Patent Laying-Open No. 8-186518 discloses one example of a radio communication device that is provided with an antenna (hereinafter, referred to as cover antenna) in a cover that is freely openable.

This cover antenna is provided with first and second components, and when the cover is opened the first component is made synchronous to the operation frequency of a transmitter-receiver circuit and when the cover is closed, the second component is made synchronous to the operation frequency of the transmitter-receiver circuit. Therefore, in either of the cases in which the cover is opened and closed, the cover antenna is made synchronous to the operation frequency of the transmitter-receiver circuit.

However, in the radio communication device in the above-mentioned document, the cover needs to be provided with virtually two antennas; consequently, the antenna efficiency might deteriorate due to coupling of these antennas. Moreover, the above-mentioned cover antenna requires two power supply lines, resulting in a complex mechanism and a difficulty in the layout of the power supply lines.

### Disclosure of the Invention

The present invention has been devised to solve the above-mentioned problems. The object of the present invention is to make the layout of the power supply lines easier while preventing the degradation in the antenna efficiency in a portable radio provided with an antenna in a cover that is freely opened and closed.

In one aspect of the present invention, the portable radio is provided with a casing, a cover, a dipole antenna, a power supply means, an open-close detection means, and a power supply control means. The cover is attached to the casing so as to be freely opened and closed. The dipole antenna is attached to the cover. The power supply means supplies power to the dipole antenna. The open-close detection means detects the opening/closing of the cover. The power supply control means controls the power supply means based upon the results of detection of the open-close detection means.

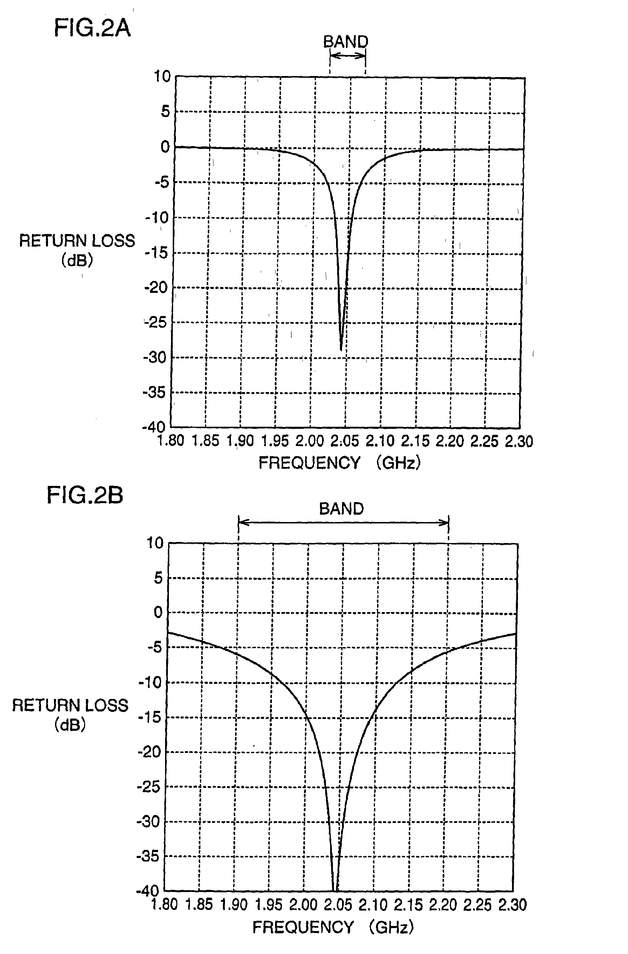

In the case when an antenna is attached to the cover, it functions as a dipole antenna when the cover is open; therefore, it is possible to obtain approximately 20% of the band having a return loss of approximately -6 dB. However, when the cover is closed, base conductors of the substrate inside the casing are placed close to each other, with the result that the band is reduced to approximately 2 % (see Fig. 2A). In order to solve this problem, the inventors of the present invention have studied hard to discover that it becomes possible to ensure a comparatively wide band having a return loss of not more than a predetermined value, by properly controlling the power supply means in response to the opening/closing of the cover when the cover is provided with one dipole antenna. More specifically, for example, parallel two-line type power supply lines are adopted as the power supply means, as will be described later, and the exciting method of these power supply lines are properly revised so that, as illustrated in Fig. 2B, it becomes possible to maintain approximately 15% of the band having a return loss of approximately -6 dB even when the cover is closed. With this arrangement, a single antenna can deal with either of the cases in which the cover is opened and closed, and different from the conventional system, it is possible to eliminate the necessity of installing two antennas. Consequently, it becomes possible to prevent the reduction of the antenna efficiency. Moreover, since it is not necessary to install two antennas, the layout of the power supply line is easily carried out.

The above-mentioned power supply means includes the parallel two-line type power supply lines. In this case, in the state where the cover is open, the parallel two-line type power supply lines are excited in reversed phases, and in the state where the cover is closed, the parallel two-line type power supply lines are excited in the same phase. Thus, as described above, in either of the cases in which the cover is opened and closed, it becomes possible to maintain the band having a return loss of approximately -6 dB.

Moreover, the above-mentioned power-supply means may include a coaxial line. The coaxial line is provided with an external conductor and an inner conductor, with the external conductor and the casing being short-circuited; thus, in the state where the cover is open, the inner conductor is excited, and in the state where the cover is closed, the external conductor is excited.

In this manner, the external conductor is excited with the cover being closed so that it becomes possible to obtain the same effect as the two-line type power supply line that are excited in the same phase. Moreover, the inner conductor is excited with the cover being opened so that it becomes possible to obtain the same effect as the two-line type power supply line that are excited in reversed phases. Therefore, it is assumed that in either of the cases in which the cover is opened and closed, it is possible to maintain the band having a return loss of approximately -6 dB.

Here, the gap between the power supply point of the external conductor and the short-circuit point of the casing in the external conductor is preferably set to a quarter wavelength.

Thus, since the impedance from the power supply through the short-circuit point becomes infinite, it is possible to minimize the influence of the short-circuit point given to the impedance of the power supply point.

In another aspect of the present invention, the portable radio is provided with a casing, a cover, a dipole antenna, a power supply means and a resonator. The cover is attached to the casing so as to be freely opened and closed. The dipole antenna is installed in the cover. The power supply means supplies power to the dipole antenna. The resonator, which is placed in the casing, is placed in a position close to the dipole antenna when the cover is closed.

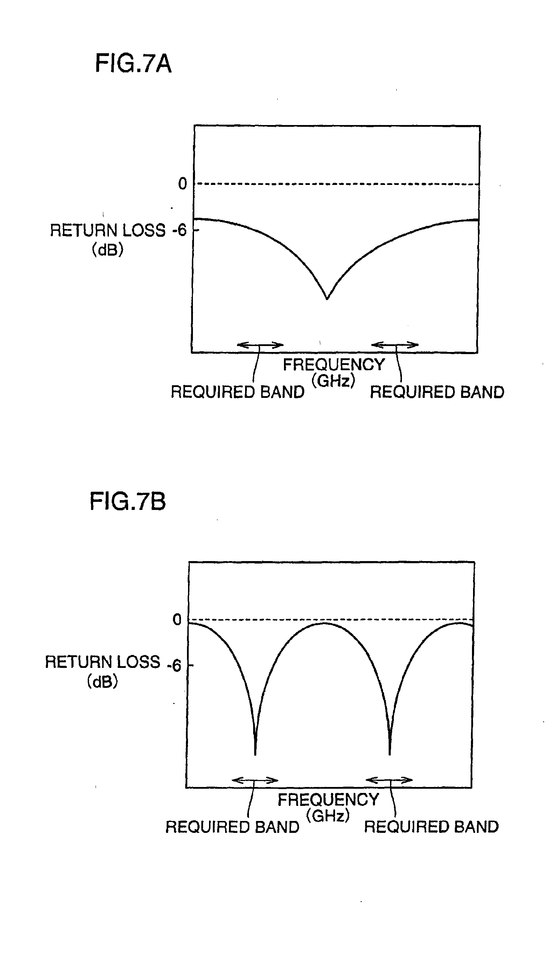

When the cover is closed, the band is normally narrowed. However, by placing a resonator at the above-mentioned position, the frequencies having a low return loss are dispersed. With this arrangement, for example, it is possible to obtain a frequency characteristic as shown in Fig. 7B; consequently, it becomes possible to maintain a comparatively wide band having a return loss of approximately -6 dB, even when the cover is closed. On the other hand, as shown in Fig. 7A, even when the cover is open, it becomes possible to maintain a wide band having a return loss of approximately -6 dB. As a result, it is possible to maintain a band having a return loss of approximately -6 dB in either of the cases in which the cover is opened and closed.

Here, with respect to the resonator, a quarter wavelength resonator with one end being short-circuited and the other end being opened or a half wavelength resonator with both of the ends being opened may be used.

In still another aspect of the present invention, the portable radio is provided with a casing, a cover, a dipole antenna, a power supply means, an open-close detection means, first and second matching circuits and first and second switches. The cover is attached to the casing so as to be freely opened and closed. The dipole antenna is attached to the cover. The power supply means supplies power to the dipole antenna. The open-close detection means detects the opening/closing of the cover. Based upon the result of the detection by the open-close detection means, the first switch makes a switchover between the first and second matching circuits and the power supply means. Based upon the result of the detection by the open-close detection means, the second switch makes a switchover between the first and second matching circuits and the dipole antenna.

As described above, in the case when the matching circuit is switched in response to the opening/closing of the cover, the frequencies having a low return loss are dispersed in the same manner as the case in which the resonator is installed. Thus, it is possible to maintain a band having a return loss of approximately -6 dB in either of the cases in which the cover is opened and closed. In any one of the above-mentioned aspects, the dipole antenna is preferably extended in a direction orthogonal to the length direction of the box-shape body.

With this arrangement, when communication is made with the casing being tilted, polarized wave components perpendicular to the ground become greater, making it possible to provide a better matching property to the base station having perpendicularly polarized waves. This also makes it possible to effectively prevent the degradation in the antenna efficiency.

Moreover, in any one of the above-mentioned aspects, the top portion of the dipole antenna may be simply bent, or the top portion of the dipole antenna may be bent in a meandering shape. This makes it possible to shorten the physical length of the antenna.

### Brief Description of the Drawings

Fig. 1A is a schematic diagram of a portable radio in accordance with a first embodiment of the present invention.
Fig. 1B is a block diagram that explains a power supply method of the present invention.
Fig. 2A is a drawing that shows the relationship between the return loss and the frequency in the case when an antenna without any modification is excited in a reversed phase with the cover being closed in the portable radio shown in Fig. 1A.
Fig. 2B is a drawing that shows the relationship between the return loss and the frequency in the case when an antenna is excited in the same phase with the cover being closed in the portable radio shown in Fig. 1A.
Fig. 3A is a schematic diagram showing a radio in a second embodiment of the present invention.
Fig. 3B is a schematic diagram showing a modified example of the portable radio shown in Fig. 3A.
Fig. 4A is a schematic diagram showing a portable radio in a third embodiment of the present invention.
Fig. 4B is a partially enlarged side view of the portable radio shown in Fig. 4A.
Fig. 5A is a schematic diagram showing a portable radio in a fourth embodiment of the present invention.
Fig. 5B is a drawing that shows a state in which the cover of the portable radio of **Fig. 5A** is closed.
Fig. 6A is a schematic diagram showing a portable radio in a fifth embodiment of the present invention.
Fig. 6B is a circuit diagram that shows one example of a first matching circuit in **Fig. 6A**.
Fig. 6C is a circuit diagram that shows one example of a second matching circuit in **Fig. 6A**.
Fig. 7A is a drawing that shows the relationship between the return loss and the frequency in the case when an antenna is excited with the cover being opened in the portable radios of types shown in Figs. 5A and 6A.
Fig. 7B is a drawing that shows the relationship between the return loss and the frequency in the case when an antenna is excited with the cover being closed in the portable radios of types shown in Figs. 5A and 6A.

### Best Mode for Carrying Out the Invention

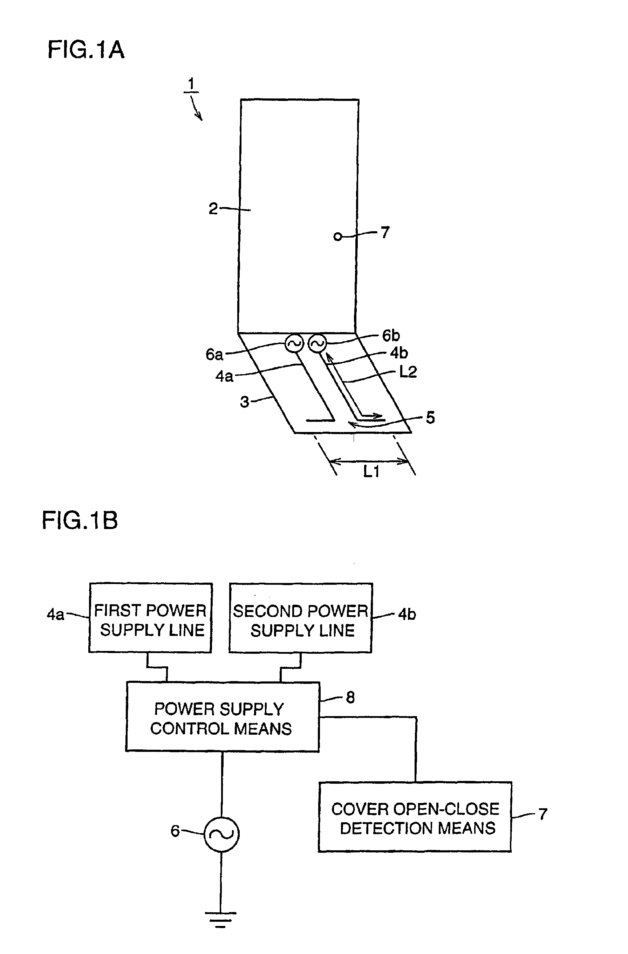

Referring to Figs. 1A to 7B, the following description will discuss embodiments of the present invention.

### (First Embodiment)

As illustrated in Fig. 1A, a portable radio 1 is provided with a casing 2 (base conductor), a cover (flip) 3 that is freely opened and closed, a dipole antenna 5, first and second power supply lines 4a, 4b, first and second power supplies 6a, 6b that are RF (Radio Frequency) power supplies and a cover open-close detection means 7.

Cover 3, which is attached to casing 2 so as to be freely opened and closed, is made from a dielectric material such as an organic polymer, and has dipole antenna 5 placed therein. The length L1 of dipole antenna 5 is a half-wavelength (λ/2), and this is extended in a direction orthogonal to the length direction of casing 2. Thus, when communication is made with casing 2 being tilted, polarized wave components perpendicular to the ground increase, thereby making it possible to provide a better matching property to a base station having perpendicularly polarized waves.

First and second power supply lines 4a, 4b and first and second power supplies 6a, 6b are allowed to function as power supply means for dipole antenna 5. As illustrated in Fig. 1, first and second power supply lines 4a, 4b are parallel two-line type power supply lines, and first and second power supply lines 4a, 4b are connected to casing 2 through power supplies 6a, 6b respectively. An electrical length L2, which is obtained by adding first or second power supply lines 4a, 4b and a half of dipole antenna 5, is set to λ/4 + N x λ/2 (N: an integer of not less than 1).

With respect to cover open-close detection means 7 for detecting the opening and closing of cover 3, for example, a cover open-close detection means that has been disclosed in Japanese Patent Laying-Open No. 6-291820 may be used. Based upon the result of detection by cover open-close detection means 7, power supplies to first and second power supply lines 4a, 4b are controlled.

More specifically, upon detection of the opening of cover 3 by cover open-close detection means 7, first and second power supply lines 4a, 4b are excited in phases reversed to each other, and upon detection of the closing of cover 3 by cover open-close detection means 7, first and second power supply lines 4a, 4b are excited in the same phase.

In a mode shown in Fig. 1A, the operations of first and second power supplies 6a, 6b (power supply means) are controlled by a control means, not shown, in response to the opening and closing of cover 3 so that the excited states of first and second power supply lines 4a, 4b are controlled as described above in response to the opening and closing of cover 3.

In a state where the cover is open, since the operation of a normal dipole antenna is available, it is possible to obtain approximately 20 % of a band having a return loss of not more than -6 dB. Moreover, Fig. 2B shows a frequency characteristic when cover 3 is closed. It is confirmed from Fig. 2B that approximately 15 % of a band having a return loss of not more than -6 dB is obtained. Thus, the above-mentioned power-supply control makes it possible to maintain a band having a return loss of approximately -6 dB in either of the cases in which the cover is opened and closed.

In other words, even in the case when a single dipole antenna 5 is placed in cover 3, by properly controlling the power supply means in response to the opening and closing of cover 3, it is possible to maintain a band having a return loss of not more than a predetermined value.

With this arrangement, the single antenna can properly deal with either of the cases where cover 3 is opened and closed so that, different from the conventional example, it is possible to eliminate the necessity of installing two covers in the cover. Consequently, it becomes possible to prevent degradation in the antenna efficiency. Moreover, since it is not necessary to install two antennas, the layout of the power supply line is easily carried out.

Here, as illustrated in Fig. 1B, a single power supply 6 is installed and a power supply control means 8 is placed between this power supply 6 and first and second power supply lines 4a, 4b so that power supply control means 8 may be connected to cover open-close detection means 7. In this case also, first and second power supply lines 4a, 4b are excited respectively as described above, in response to the opening and closing of cover 3. With respect to power supply control means 8, for example, a distributor may be used.

### (Second Embodiment)

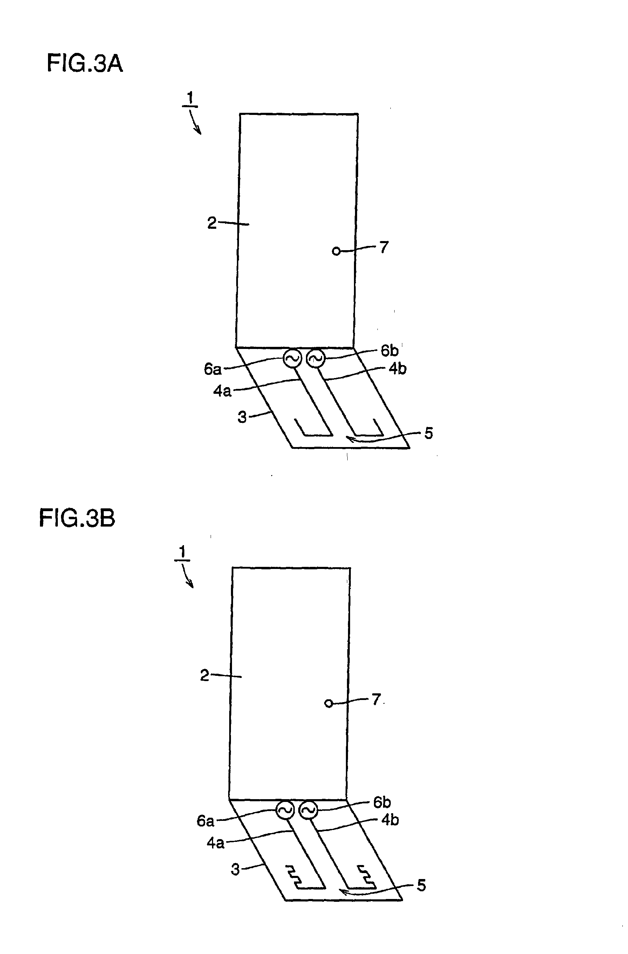

Next, referring to Figs. 3A and 3B, explanations will be given of the second embodiment and its modified examples.

As illustrated in Fig. 3A, in the second embodiment, the top portion of dipole antenna 5 is bent. Thus, the physical length of dipole antenna 5 is shortened. Thus, it becomes possible to make dipole antenna 5 compacter. The structures other than this are the same as those of the first embodiment shown in Fig. 1A.

Moreover, as illustrated in Fig. 3B, the top portion of the dipole antenna 5 may be bent in a meandering shape. This arrangement also makes it possible to provide the same effects.

### (Third Embodiment)

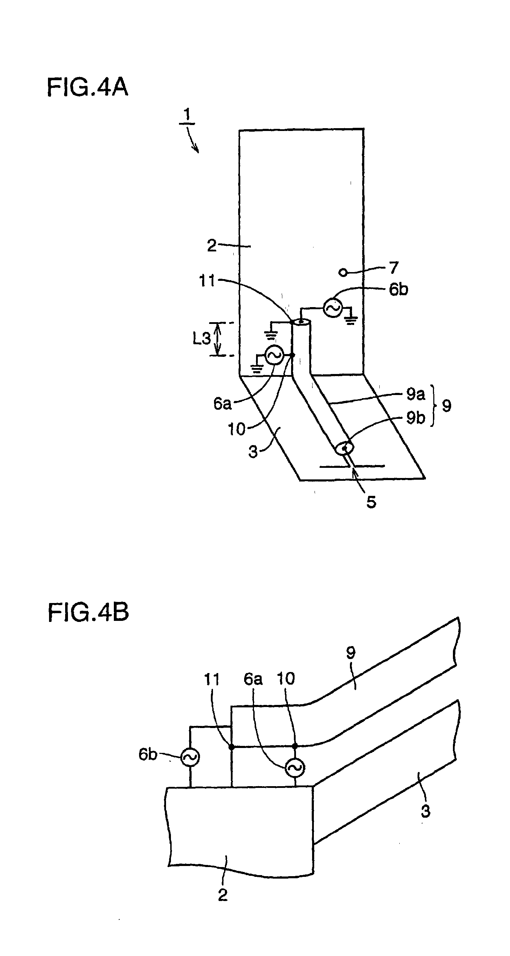

Next, referring to Figs. 4A and 4B, an explanation will be given of the third embodiment of the present invention. As illustrated in Fig. 4A, in the third embodiment, a coaxial line 9 is used as the power supply line. Coaxial line 9 is provided with an external conductor 9a and an inner conductor 9b, and external conductor 9a and casing 2 are short-circuited. In other words, external conductor 9a is grounded.

As illustrated in Fig. 4B, coaxial line 9 is placed apart from casing 2, with one end of external conductor 9a being short-circuited by casing 2 at a short-circuit point 11. Moreover, as illustrated in Figs. 4A and 4B, a distance L3 between a power supply point 10 of external conductor 9a and short-circuit point 11 is set to approximately λ/4. Thus, since the impedance from power supply 6a through short-circuit point 11 becomes infinite, it is possible to minimize the influence of short-circuit point 11 given to the impedance of power supply point 10.

In the third embodiment, inner conductor 9b is excited with cover 3 being opened, and external conductor 9a is excited with cover 3 being closed.

In this manner, by exciting external conductor 9a with cover 3 being closed, it is possible to obtain the same effects as those obtained when the parallel two-line type power supply line are excited in the same phase. Moreover, by exciting inner conductor 9b with cover 3 being opened, it is possible to obtain the same effects as those obtained when the parallel two-line type power supply line are excited in reversed phases.

Therefore, in the third embodiment also, in the same manner as the first embodiment, it becomes possible to maintain a band having a return loss of approximately -6 dB in either of the cases in which cover 3 is opened and closed.

### (Fourth Embodiment)

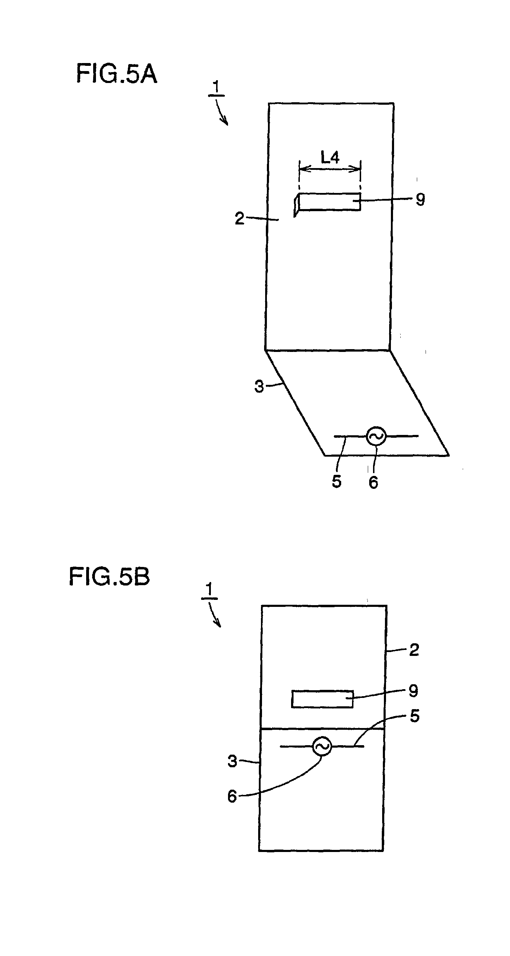

Next, referring to Figs. 5A and 5B, an explanation will be given of the fourth embodiment of the present invention.

The invention of the fourth embodiment and the invention of the fifth embodiment, which will be described later, have been devised so as to utilize two bands that are separated from each other.

In the state where cover 3 is opened, since the irradiation portion is made apart from the body of the user, it is possible to prevent the reduction in efficiency due to the human body. However, in the state where cover 3 is closed, the band is normally narrowed, resulting in a problem in which it is difficult to cover the two separated bands. Therefore, a resonance circuit is used so as to disperse frequencies having a low return loss.

As illustrated in Fig. 5A, a resonator 9 is placed in casing 2 in the fourth embodiment as one method for achieving the above-mentioned purpose. Resonator 9 is placed at a position close to dipole antenna 5 at the time when cover 3 is closed as illustrated in Fig. 5B, and excited by dipole antenna 5 in a non-contact state. Here, with respect to dipole antenna 5 and its power supply means, the same members as those used in the above-mentioned embodiments may be used.

By installing resonator 9 at the above-mentioned position, it is possible to disperse frequencies having a low return loss, and consequently to obtain a frequency characteristic, for example, shown in Fig. 7B. In other words, it becomes possible to ensure two portions of bands having a return loss of approximately -6 dB, even when cover 3 is closed.

On the other hand, at the time when cover 3 is opened, since the operation of a normal dipole antenna is available, it is possible to maintain a wide band having a return loss of approximately -6 dB as shown in Fig. 7A. As a result, in either of the cases in which the cover is opened and closed, it becomes possible to maintain a band having a return loss of approximately -6 dB.

Here, with respect to resonator 9, a λ/4 resonator with one end being short-circuited and the other end being opened [a resonator having a length L4 of λ/4 + N x λ/2 (N: an integer of not less than 1)] may be used, or a λ/2 resonator with both of the ends being opened [a resonator having a length of N x λ/2 (N: an integer of not less than 1)] may be used. Moreover, with respect to resonator 9, for example, those having a plate shape, a line shape, a meandering shape and a helical shape may be used.

### (Fifth Embodiment)

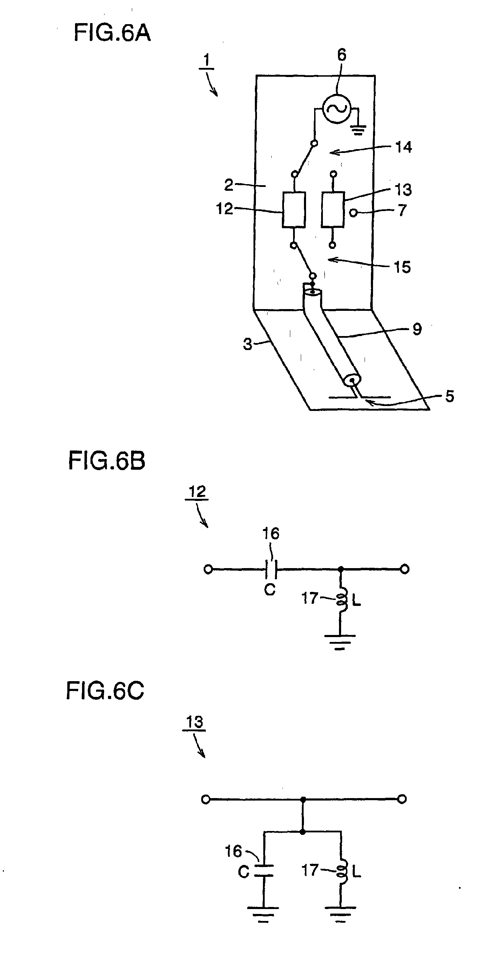

Next, referring to Figs. 6A to 6C, an explanation will be given of the fifth embodiment of the present invention. In the fifth embodiment, matching circuits are switched by using a switch so that at the time when cover 3 is closed, frequencies having a low return loss can be dispersed.

As illustrated in Fig. 6A, portable radio 1 in accordance with the fifth embodiment is provided with first and second matching circuits 12, 13, first and second switches 14, 15 and power supply 6.

First matching circuit 12 is connected to dipole antenna 5 when cover 3 is opened. Second matching circuit 13 is connected to dipole antenna 5 when cover 3 is closed.

Figs. 6B and 6C show structural examples of first and second matching circuits 12, 13. As illustrated in Figs. 6B and 6C, each of first and second matching circuits 12, 13 is provided with a capacitor 16 and a coil 17.

Based upon the result of detection by open-close detection means 7, first switch 14 switches and connects first and second matching circuits 12, 13 and power supply 6 as described above. Based upon the result of detection by open-close detection means 7, second switch 15 switches and connects first and second matching circuits 12, 13 and dipole antenna 5. In other words, when cover 3 is opened, first matching circuit 12 is connected to power supply 6 and dipole antenna 5, and when cover 3 is closed, second matching circuit 13 is connected to power supply 6 and dipole antenna 5. Here, it is possible to use a power supply line other than coaxial line 9.

In the present embodiment also, in the same manner as the fourth embodiment, characteristics shown in Figs. 7A and 7B are obtained. Therefore, in either of the cases in which cover 3 is opened and closed, it becomes possible to maintain a band having a return loss of approximately -6 dB.

While the invention has been shown and described in detail, the foregoing description is in all aspects illustrative and not restrictive. It is therefore understood that numerous other modifications and variations can be devised without departing from the scope of the invention.

### Industrial Applicability

The present invention can be effectively applied to a portable radio in which an antenna is installed in a cover (flip) that is attached to a casing so as to be freely opened and closed.

## Claims

1. A portable radio comprising:
a casing (2);
a cover (3) attached to said casing (2) so as to be freely opened and closed;
a dipole antenna (5) attached to said cover (3);
power supply means (4a, 4b, 6a, 6b) for supplying power to said dipole antenna (5);
open-close detection means (7) for detecting the opening/closing of said cover (3); and
power supply control means (8) for controlling said power supply means (4a, 4b, 6a, 6b) based upon results of detection of said open-close detection means (7).

2. The portable radio according to claim 1, wherein said power supply means (4a, 4b, 6a, 6b) comprises parallel two-line type power supply lines (4a, 4b), said parallel two-line type power supply lines being excited in reversed phases in a state where said cover (3) is open, said parallel two-line type power supply lines being excited in the same phase in a state where said cover (3) is closed.

3. The portable radio according to claim 1, wherein: said power supply means (4a, 4b, 6a, 6b) comprises a coaxial line (9), said coaxial line (9) being provided with an external conductor (9a) and an inner conductor (9b), with said external conductor (9a) and said casing (2) being short-circuited, and excites said inner conductor (9b) in a state where said cover (3) is open, and excites said external conductor (9a) in a state where said cover (3) is closed.

4. The portable radio according to claim 3, wherein a power supply point (10) of said external conductor (9a) and a short-circuit point (11) of said external conductor (9a) to said casing (2) has a gap of a quarter wavelength.

5. The portable radio according to claim 1, wherein said dipole antenna (5) is extended in a direction orthogonal to a length direction of said casing (2).

6. The portable radio according to claim 1, wherein said dipole antenna (5) has a top end that is bent.

7. The portable radio according to claim 1, wherein said dipole antenna (5) has a top end that is bent into a meandering shape.

8. A portable radio comprising:
a casing (2);
a cover (3) attached to said casing (2) so as to be freely opened and closed;
a dipole antenna (5) attached to said cover (3);
power supply means (6) for supplying power to said dipole antenna (5); and
a resonator (9) installed in said casing (2),
wherein said resonator (9) is placed in a position close to said dipole antenna (5) when said cover (3) is closed.

9. The portable radio according to claim 8, wherein said resonator (9) comprises a quarter wavelength resonator with one end being short-circuited, the other end being opened.

10. The portable radio according to claim 8, wherein said resonator (9) comprises a half wavelength resonator with both of the ends being opened.

11. The portable radio according to claim 8, wherein said dipole antenna (5) is extended in a direction orthogonal to a length direction of said casing (2).

12. The portable radio according to claim 8, wherein said dipole antenna (5) has a top end that is bent.

13. The portable radio according to claim 8, wherein said dipole antenna (5) has a top end that is bent into a meandering shape.

14. A portable radio comprising:
a casing (2);
a cover (3) attached to said casing (2) so as to be freely opened and closed;
a dipole antenna (5) attached to said cover (3);
power supply means (6) for supplying power to said dipole antenna (5);
open-close detection means (7) for detecting the opening/closing of said cover (3);
first and second matching circuits (12, 13);
a first switch (14) which, based upon the result of detection by said open-close detection means (7), makes a switchover between said first and second matching circuits (12, 13) and said power supply means (6); and
a second switch (15) which, based upon the result of detection by said open-close detection means (7), makes a switchover between said first and second matching circuits (12, 13) and said dipole antenna (5).

15. The portable radio according to claim 14, wherein said dipole antenna (5) is extended in a direction orthogonal to a length direction of said casing (2).

16. The portable radio according to claim 14, wherein said dipole antenna (5) has a top end that is bent.

17. The portable radio according to claim 14, wherein said dipole antenna (5) has a top end that is bent into a meandering shape.
